**Europäisches Patentamt**

**European Patent Office**

**Office européen des brevets**

(11) Veröffentlichungsnummer: **0 172 530**
**B1**

(12) **EUROPÄISCHE PATENTSCHRIFT**

(45) Veröffentlichungstag der Patentschrift: **25.04.90**

(21) Anmeldenummer: **85110209.5**

(22) Anmeldetag: **14.08.85**

(51) Int. Cl.⁵: **B 01 J 8/38,** B 01 F 13/02,
F 26 B 3/08, B 01 J 2/16,
B 01 J 2/00

(54) **Fliessbettapparatur.**

(30) Priorität: **20.08.84 DE 3430633**

(43) Veröffentlichungstag der Anmeldung:
**26.02.86 Patentblatt 86/09**

(45) Bekanntmachung des Hinweises auf die
Patenterteilung:
**25.04.90 Patentblatt 90/17**

(84) Benannte Vertragsstaaten:
**AT BE CH DE FR GB IT LI**

(56) Entgegenhaltungen:
**EP-A-0 103 894**
**DE-B-1 667 217**
**DE-C- 960 821**
**FR-A-2 190 504**

(73) Patentinhaber: **Hüttlin, Herbert**
**Daimlerstrasse 7**
**D-7853 Steinen (DE)**

(72) Erfinder: **Hüttlin, Herbert**
**Daimlerstrasse 7**
**D-7853 Steinen (DE)**

(74) Vertreter: **Wuesthoff, Franz, Dr.-Ing. et al**
**Wuesthoff & Wuesthoff Patent- und**
**Rechtsanwälte Schweigerstrasse 2**
**D-8000 München 90 (DE)**

Courier Press, Leamington Spa, England.

## Beschreibung

Die Erfindung betrifft eine Fließbettapparatur zum Mischen, Trocknen, Granulieren, Pelletieren, Lackieren und/oder Dragieren pulvrigen oder körnigen Gutes mit

— einem Behälter, der in Bezug auf eine zumindest annähernd senkrechte Behälterachse zumindest annähernd rotationssymmetrisch, insbesondere kugelförmig ist und ein Unterteil mit nach unten abnehmendem Innendurchmesser sowie einem ringförmigen unteren Rand hat,

— einem Gaseinlaß, der am unteren Rand des Unterteils angeordnet, über einen Ringkanal an eine Gasquelle anschließbar ist und Gas schräg nach unten in den Behälter einströmen läßt,

— einem zentralen Umlenkkörper, der den Behälter im Betrieb nach unten abschließt und eingeleitetes Gas nach oben umlenkt und

— einem Gasauslaß in einem oberen Bereich des Behälters.

Eine bekannte Apparatur dieser Gattung (DE-A 1 632 404) ist als Vorrichtung zum pneumatischen Mischen mehrerer pulverförmiger Stoffe oder zum Zumischen von Flüssigkeiten zu einem trockenen Stoffgemisch vorgesehen. Der Gaseinlaß ist von einem Kranz einzelner Düsen gebildet, die von einer rings um den Behälter angeordneten Ringleitung abzweigen.

Der Erfindung liegt die Aufgabe zugrunde, eine Fließbettapparatur zum Mischen, Trocknen, Granulieren, Pelletieren, Lackieren und/oder Dragieren pulvrigen oder körnigen Gutes bei gegebener Baugröße der Apparatur noch leistungsfähiger und vielseitiger anwendbar zu gestalten.

Die Aufgabe ist erfindungsgemäß ausgehend von einer Fließbettapparatur der eingangs beschriebenen Gattung dadurch gelöst, daß

— der Ringkanal in einem Sockel ausgebildet ist, der das Unterteil des Behälters trägt,

— der Gaseinlaß einen im Sockel ausgebildeten Ringspalt aufweist und

- radial innerhalb des Ringspalts mindestens eine Düse zum Einsprühen flüssiger und/oder pulverförmiger Stoffe angeordnet ist.

Durch den Ringspalt läßt sich das zum Behandeln des Gutes erforderliche Gas oder ein Teil dieses Gases vollkommen gleichmäßig in den Behälter einleiten; das Gas bildet auf der Innenwand des Sockels eine Art Luftkissen, auf dem das zu behandelnde Gut abwärts und radial nach innen gleitet und in einen Schwebezustand gebracht wird, der die anschließende, vom Umlenkkörper bewirkte Aufwärtsbewegung des Gutes vorbereitet. Tote Zonen, in denen Teile des Gutes liegenbleiben oder auch nur gegenüber dem Hauptstrom des Gutes zurückbleiben könnten, werden durch den Gaseinlaß in Form eines Ringspaltes vermieden. In dem somit vollständig gleichmäßigen Gas- und Gutstrom sind erfindungsgemäß die Düsen angeordnet, durch die sich flüssige und/oder pulverförmige Stoffe zum Befeuchten des Gutes, Anlagern an das Gut oder auch zum Erzeugen des Gutes in Form eines Aufbaugranulates einsprühen lassen.

Bei einer Ausführungsform weist der Gaseinlaß zwei oder mehr im Sockel gleichachsig ausgebildete Ringspalte mit unterschiedlichen Durchmessern auf.

Dabei ist der Ringspalt kleinsten Durchmessers vorzugsweise an einen ringförmigen Umlenkkanal zwischen dem Umlenkkörper und einem auf diesen aufgesetzten Mantel angeschlossen, der in einem oberen Endbereich des Umlenkkörpers in den Behälter mündet.

Bei dieser letztgenannten Ausführungsform ist mindestens eine Düse zum Einsprühen flüssiger und/oder pulverförmiger Stoffe vorzugsweise radial innerhalb der Mündung des Umlenkkanals angeordnet.

Das Prinzip der Erfindung läßt sich auch bei einer aus der EP-A-O103894 (& DE-A-3234911) bekannten Fließbettapparatur anwenden, die ausgestattet ist mit

— einem Behälter, der in bezug auf eine zumindest annähernd senkrechte Behälterachse zumindest annähernd rotationssymmetrisch, insbesondere kugelförmig ist und ein Unterteil mit nach unten abnehmendem Innendurchmesser hat,

— einer Schüssel, die eine mit dem Behälter gleichachsige, zumindest annähernd zylindrische Wand sowie einen Umlenkkörper als Boden aufweist, und

— einem Tauchrohr, das axial von oben her in die Schüssel hineinragt, mit deren Wand einen schlanken Ringraum begrenzt und an eine Gasquelle anschließbar ist.

Diese Fließbettapparatur ist erfindungsgemäß dadurch weitergebildet, daß

— in einem Sockel, der das Unterteil des Behälters trägt, ein Ringkanal ausgebildet ist,

— als zusätzlicher Gaseinlaß oberhalb und radial außerhalb der Wand der Schüssel ein Ringspalt angeordnet ist, der über den Ringkanal ebenfalls an eine Gasquelle anschließbar ist, und

— radial innerhalb des Ringspalts mindestens eine Düse zum Einsprühen flüssiger und/oder pulverförmiger Stoffe angeordnet ist.

Bei allen beschriebenen Ausführungsformen der Erfindung sind die Düsen vorzugsweise zumindest annähernd im rechten Winkel zum durch den Ringspalt eintretenden Gasstrom aufwärts gerichtet.

Es ist ferner zweckmäßig, wenn Flüssigkeitsdüsen und Feststoffdüsen paarweise untereinander angeordnet sind.

Ausführungsbeispiele der Erfindung werden im folgenden anhand schematischer Zeichnungen mit weiteren Einzelheiten erläutert. Es zeigen, jeweils im Axialschnitt,

Fig. 1 eine erste erfindungsgemäße Fließbettapparatur,

Fig. 1a einen vergrößerten Ausschnitt aus Fig. 1 und

Fig. 2 eine zweite erfindungsgemäße Fließbettapparatur.

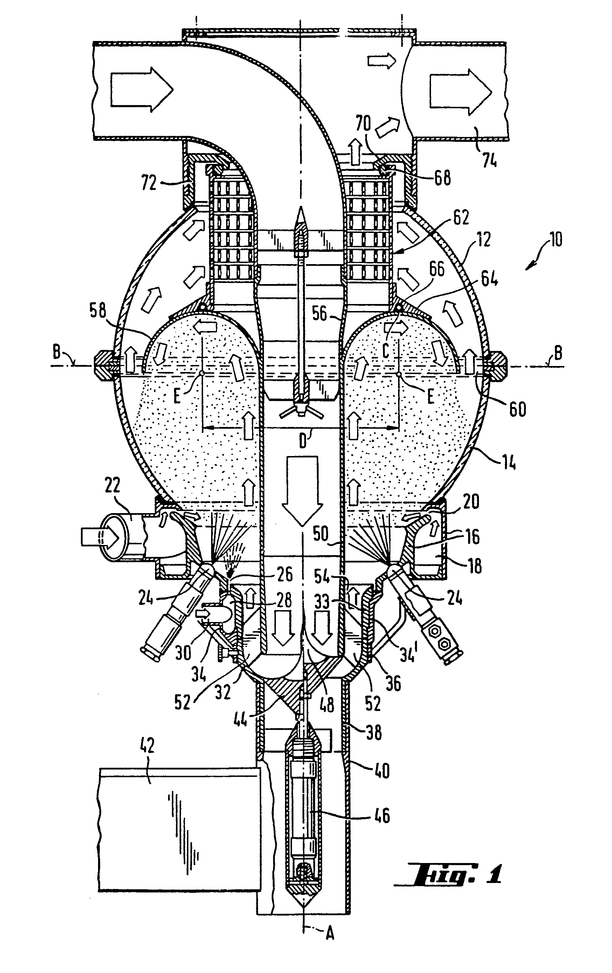

Die in Fig. 1 dargestellte Fließbettapparatur hat einen Behälter 10, der in bezug auf eine senkrechte Achse A rotationssymmetrisch und großenteils kugelförmig ist. Der Behälter besteht aus einem Oberteil 12 und einem Unterteil 14, die beide aus Glas bestehen und in einer waagerechten Äquatorialebene B-B dicht, jedoch leicht lösbar, miteinander verbunden sind. Das Unterteil 14 ruht auf einem rotationssymmetrischen Sockel 16; in diesem ist ein Ringkanal 18 ausgebildet, der durch einen ununterbrochenen Ringspalt 20 mit dem Inneren des Behälters 10 verbunden ist. In den Ringkanal 18 mündet tangential mindestens eine Leitung 22, die an eine Gasquelle angeschlossen ist.

Unterhalb des Ringspalts 20 sind in gleichmäßigen Abständen rings um die Achse A mehrere Flüssigkeitsdüsen 24 und in geringem Abstand unterhalb davon je eine Feststoffdüse 26 angeordnet. Die Feststoffdüsen 26 sind an eine Ringkammer 28 angeschlossen, in die mindestens eine Leitung 30 für pulverförmige Feststoffe tangential einmündet.

An den Sockel 16 schließt sich unterhalb und radial innerhalb der Feststoffdüsen 26 eine Schüssel 32 an, deren im wesentlichen zylindrische Wand 33 zusammen mit einem sie umgebenden Mantel 34 die Ringkammer 28 bildet. Falls die nur in der linken Hälfte der Fig. 1 dargestellte Ringkammer 28 nicht benötigt wird, kann der Mantel 34, wie in der rechten Hälfte der Fig. 1 dargestellt, durch einen Mantel 34' ersetzt werden, der unmittelbar an der zylindrischen Wand 33 der Schüssel 32 anliegt. In beiden Fällen ist der Mantel 34 bzw. 34' von unten her auf die Schüssel 32 aufgeschoben und durch einen Stützring 36 abgestützt, der, ebenfalls von unten her, auf die Schüssel 32 aufgeschraubt ist.

Die Schüssel 32 hat einen axial nach unten ragenden Rohrstutzen 38, der über ein Stützrohr 40 an einem Tragarm 42 abgestützt ist. Innerhalb des Rohrstutzens 38 ist ein zentraler, rotationssymmetrischer Umlenkkörper 44 angeordnet, der in seiner links in Fig. 1 dargestellten Betriebsstellung die Schüssel 32 als deren Boden nach unten abschließt und in seiner rechts in Fig. 1 dargestellten Entleerungsstellung einen Ringspalt freigibt, durch den der Behälter 10 entleert werden kann. Zum Verschieben des Umlenkkörpers 44 zwischen den beiden genannten Stellungen ist innerhalb des Rohrstutzens 38 eine Kolbenzylindereinheit 46 angeordnet.

Der Umlenkkörper 44 hat ein spitzes Mittelteil 48, das axial nach oben in das untere Ende eines ebenfalls axial angeordneten Tauchrohrs 50 hineinragt. Das Tauchrohr 50 ist mit seinem unteren Ende durch Streben 52 an der Schüssel 32 abgestützt und begrenzt mit der zylindrischen Wand der Schüssel einen schlanken Ringraum 54.

Rings um das obere Ende des Tauchrohrs 50, in das ein Gaseinlaßrohr 56 mündet, ist ein Abweisschirm 58 angeordnet, der aus glattem Blech besteht und ein ringförmiges Gewölbe von halbkreisförmigem Querschnitt bildet. Das Gewölbe hat einen kreisförmigen Scheitel C, dessen Durchmesser D ungefähr halbsogroß ist wie der größte Innendurchmesser des Behälters 10. Die Krümmungsmittelpunkte sämtlicher Querschnitte des Gewölbes bilden einen Kreis E, der ungefähr in der Äquatorialebene B des Behälters 10 liegt. Der Abweisschirm 58 schließt sich dicht an das obere Ende des Tauchrohrs 50 an und läßt zwischen sich und dem Behälter 10 außen einen Ringspalt 60 frei, dessen Querschnittsfläche merklich größer ist als die Querschnittsfläche des Ringraumes 54.

Auf dem Abweisschirm 58 ruht ein im Querschnitt kreisförmiger, im dargestellten Beispiel zylindrischer Filter 62 mit einem Fußring 64. Der Fußring 64 hat eine kegelförmig nach außen abfallende Oberseite und ist durch eine in seine Unterseite eingebettete ringförmige Dichtung 66 gegen den Abweisschirm 58 im Bereich von dessen Scheitel C abgedichtet.

Nach oben hin ist der Filter 62 durch eine weitere ringförmige Dichtung 68 gegen einen ringförmigen Stutzen 70 abgedichtet, der an einem Behälteraufsatz 72 ausgebildet ist. Der Behälteraufsatz 72 hat einen Gasauslaß 74, der in üblicher, nicht dargestellter Weise an eine Einrichtung zum Wiederaufbereiten des ausgetretenen Gases anschließbar ist.

Die in Fig. 1 dargestellte Fließbettapparatur läßt sich beispielsweise so betreiben, daß in den zu Betriebsbeginn leeren Behälter 10 durch das Tauchrohr 50 erhitzte Luft eingeleitet wird. Die Luft wird von dem in seine Betriebsstellung abgesenkten Umlenkkörper 44 umgelenkt, durchströmt den Ringraum 54 senkrecht nach oben rings um das Tauchrohr 50 und wird vom Abweisschirm 58 nach außen und nach unten abgelenkt, so daß sich im Bereich unterhalb des Abweisschirms ein toroidförmiger Wirbel bildet. Dieser Wirbel wird durch zusätzliche Luft unterstützt, die durch den Ringspalt 20 in das Innere des Behälters 10 derart eingeleitet wird, daß sie schräg nach unten und innen strömt.

In die durch den Ringspalt 20 eintretende zusätzliche Luft wird durch die Flüssigkeitsdüsen 24 eine Flüssigkeit oder ein Flüssigkeitsgemisch und durch die Feststoffdüsen 26 ein Feststoff oder Feststoffgemisch in Pulverform eingesprüht. Dadurch bildet sich innerhalb des Luftwirbels ein Aufbaugranulat, das von dem rings um das Tauchrohr 50 aufsteigenden Luftstrom nach oben mitgerissen und vom Abweisschirm 58 radial nach außen und dann nach unten abgelenkt wird. Die durch den Ringspalt 20 eintretende zusätzliche Luft bildet eine Art Luftkissen, auf dem das Aufbaugranulat oder sonstiges in dem Behälter 10 behandeltes Gut gleichmäßig nach unten rutscht, um dann oberhalb des Ringraumes 54 erneut axial aufwärts bewegt zu werden. Verbrauchte Luft strömt durch den Ringspalt 60 nach oben, wird vom Filter 62 gereinigt und gelangt von dort zum Gasauslaß 74.

Die beschriebene Fließbettapparatur kann auch in anderer Weise betrieben werden, z.B. können Granulationskerne oder ein fertiges Granulat in den Behälter 10 eingebracht und dort lackiert oder dragiert werden.

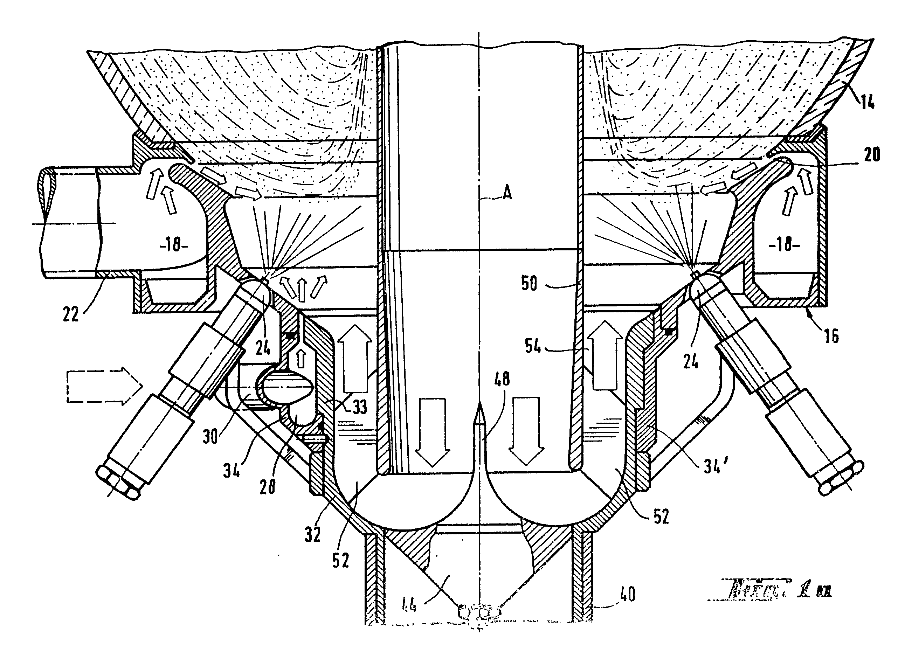

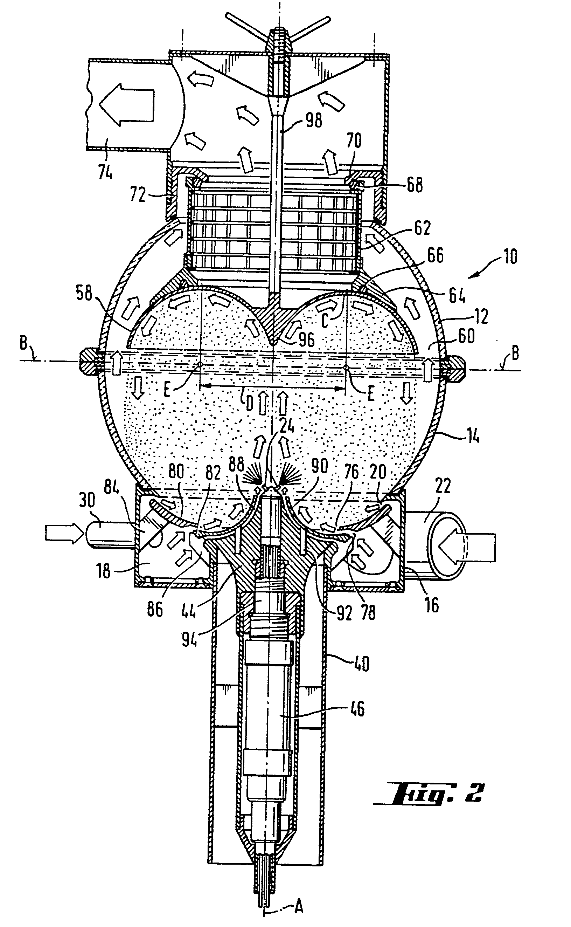

Die Ausführungsform gemäß Fig.2 unterscheidet sich von der in Fig. 1 dargestellten im wesentlichen dadurch, daß Schüssel 32 und Tauchrohr 50 samt Gasauslaßrohr 56 fortgelassen sind, der Sockel 16 als Gaseinlaß radial innerhalb des Ringspalts 20 zwei weitere Ringspalte 76 und 78 aufweist und der Umlenkkörper 44 sich unmittelbar an den Sockel 16 anschließt.

Die Ringspalte 20 und 76 einerseits und die Ringspalte 76 und 78 andererseits sind durch ringförmige Wandabschnitte 80 und 82 des Sockels 16 voneinander getrennt, die innerhalb des Ringkanals 18 durch Streben 84 bzw. 86 abgestützt sind. Die Ringspalte 20 und 76 münden unmittelbar in den Behälter 10. Der Ringspalt 78 ist an einen ringförmigen Umlenkkanal 88 angeschlossen, der zwischen dem Umlenkkörper 44 und einem Mantel 90 aus Edelstahlblech ausgebildet ist. Der Mantel 90 ist an achsparallelen Bolzen 92 befestigt, die von oben her in den Umlenkkörper 44 eingesteckt sind.

In eine axiale Bohrung des Umlenkkörpers 44 ist von unten her ein Düsenträger 94 eingesetzt, der radial innerhalb der Mündung des ringförmigen Umlenkkanals 88 aus dem Umlenkkörper 44 nach oben herausragt und einen Kranz Düsen 24 zum Einsprühen flüssiger Stoffe aufweist. In den Ringkanal 18 des Sockels 16 mündet, wie bei der Ausführungsform gemäß Fig. 1, die an die Gasquelle angeschlossene Leitung 22 und, abweichend von Fig. 1, die Leitung 30 für pulverförmige Feststoffe.

Der Abweisschirm 58 hat einen zentralen Abweiskörper 96, an dem ein axialer Zuganker 98 befestigt ist. Durch diesen Zuganker 98 sind Abweisschirm 58 und Filter 62 mit dem Behälteraufsatz 72 in leicht lösbarer Weise zusammengespannt.

**Patentansprüche**

1. Fließbettapparatur zum Mischen, Trocknen, Granulieren, Pelletieren, Lackieren und/oder Dragieren pulvrigen oder körnigen Gutes mit
— einem Behälter (10), der in Bezug auf eine zumindest annähernd senkrechte Behälterachse (A) zumindest annähernd rotationssymmetrisch, insbesondere kugelförmig ist und ein Unterteil (14) mit nach unten abnehmendem Innendurchmesser sowie einem ringförmigen unteren Rand hat,
— einem Gaseinlaß, der am unteren Rand des Unterteils (14) angeordnet, über einen Ringkanal (18) an eine Gasquelle anschließbar ist und Gas mit einer radial nach innen gerichteten Strömungskomponente in den Behälter (10) einströmen läßt,
— einem zentralen Umlenkkörper (44), der den Behälter (10) im Betrieb nach unten abschließt und eingeleitetes Gas nach oben umlenkt, und
— einem Gasauslaß (74) in einem oberen Bereich des Behälters (10),
dadurch gekennzeichnet, daß
— der Ringkanal (18) in einem Sockel (16) ausgebildet ist, der das Unterteil (14) des Behälters (10) trägt,
— der Gaseinlaß einen im Sockel (16) ausgebildeten Ring- spalt (20) aufweist und
— radial innerhalb des Ringspalts (20) mindestens eine Düse (24, 26) zum Einsprühen flüssiger und/oder pulverförmiger Stoffe angeordnet ist.

2. Fließbettapparatur nach Anspruch 1, dadurch gekennzeichnet, daß der Gaseinlaß zwei oder mehr im Sockel (16) gleichachsig ausgebildete Ringspalte (20, 76, 78) mit unterschiedlichen Durchmessern aufweist.

3. Fließbettapparatur nach Anspruch 2, dadurch gekennzeichnet, daß der Ringspalt (78) kleinsten Durchmessers an einen ringförmigen Umlenkkanal (88) zwischen dem Umlenkkörper (44) und einem auf diesen aufgesetzten Mantel (90) angeschlossen ist, der in einem oberen Endbereich des Umlenkkörpers (44) in den Behälter (10) mündet.

4. Fließbettapparatur nach Anspruch 3, dadurch gekennzeichnet, daß mindestens eine Düse (24) zum Einsprühen flüssiger und/oder pulverförmiger Stoffe radial innerhalb der Mündung des Umlenkkanals (88) angeordnet ist.

5. Fließbettapparatur zum Mischen, Trocknen, Granulieren, Pelletieren, Lackieren und/oder Dragieren pulvrigen oder körnigen Gutes mit
— einem Behälter (10), der in bezug auf eine zumindest annähernd senkrechte Behälterachse (A) zumindest annähernd rotationssymmetrisch, insbesondere kugelförmig ist und ein Unterteil (14) mit nach unten abnehmendem Innendurchmesser hat,
— einer Schüssel (32), die eine mit dem Behälter (10) gleichachsige, zumindest annähernd zylindrische Wand (33) sowie einen Umlenkkörper (44) als Boden aufweist, und
— einem Tauchrohr (50), das axial von oben her in die Schüssel (32) hineinragt, mit deren Wand (33) einen schlanken Ringraum (54) begrenzt und an eine Gasquelle anschließbar ist,
dadurch gekennzeichnet, daß
— in einem Sockel (16), der das Unterteil (14) des Behälters (10) trägt, ein Ringkanal (18) ausgebildet ist,
— als zusätzlicher Gaseinlaß oberhalb und radial außerhalb der Wand (33) der Schüssel (32) ein Ringspalt (20) angeordnet ist, der über den Ringkanal (18) ebenfalls an eine Gasquelle anschließbar ist, und
— radial innerhalb des Ringspalts (20) mindestens eine Düse (24, 26) zum Einsprühen flüssiger und/oder pulverförmiger Stoffe angeordnet ist.

6. Fließbettapparatur nach einem der Ansprüche 1 bis 5, dadurch gekennzeichnet, daß die Düsen (24, 26) zumindest annähernd im rechten Winkel zum durch den Ringspalt (20) eintretenden Gasstrom aufwärts gerichtet sind.

7. Fließbettapparatur nach einem der Ansprüche 1 bis 6, dadurch gekennzeichnet, daß Flüssigkeitsdüsen (24) und Feststoffdüsen (26) paarweise untereinander angeordnet sind.

**Revendications**

1. Appareil à lit de fluidisation pour mélange, séchage, granulation, transformation en boulettes, laquage et/ou transformation en dragées d'une matière pulvérulente ou granuleuse, comportant:

— un récipient (10), qui a un profil au moins approximativement à symétrie de révolution, notamment de forme sphérique, par rapport à un axe (A) orienté au moins approximativement verticalement, et qui comporte une partie inférieure (14) pourvue d'un diamètre intérieur diminuant vers le bas ainsi que d'un bord inférieur de forme annulaire,

— une entrée de gaz, qui est disposée sur le bord inférieur de la partie inférieure (14), qui peut être reliée à une source de gaz par l'intermédiaire d'un canal annulaire (18) et qui permet à du gaz de pénétrer dans le récipient (10) avec une composante d'écoulement orientée radialement vers l'intérieur,

— un corps central de renvoi (44), qui ferme vers le bas le récipient (10) en service et qui dévie vers le haut du gaz introduit, et

— une sortie de gaz (74) située dans une zone supérieure du récipient (10),

— caractérisé en ce que:

— le canal annulaire (18) est formé dans un socle (16) qui porte la partie inférieure (14) du récipient (10),

— l'entrée de gaz comporte un intervalle annulaire (20) formé dans le socle (16) et

— il est prévu radialement à l'intérieur de l'intervalle annulaire (20) au moins une buse (24, 26) pour l'injection de substances liquides et/ou pulvérulentes.

2. Appareil à lit de fluidisation selon la revendication 1, caractérisé en ce que l'entrée de gaz comporte deux ou plus de deux intervalles annulaires (20, 76, 78), ayant des diamètres différents et disposés coaxialement dans le socle (16).

3. Appareil à lit de fluidisation selon la revendication 2, caractérisé en ce que l'intervalle annulaire (78) de diamètre minimal est relié à un canal de renvoi (88) de forme annulaire entre le corps de renvoi (44) et une enveloppe (90) placée sur celui-ci et débouchant dans le récipient (10) dans une zone extrême supérieure du corps de renvoi (44).

4. Appareil à lit de fluidisation selon la revendication 3, caractérisé en ce qu'au moins une buse (24) d'injection de substances liquides et/ou pulvérulentes est disposée radialement à l'intérieur de l'embouchure du canal de renvoi (88).

5. Appareil à lit de fluidisation pour mélange, séchage, granulation, transformation en boulettes, laquage et/ou transformation en dragées d'une matière pulvérulente ou granuleuse, comportant:

— un récipient (10), qui a un profil au moins approximativement à symétrie de révolution, notamment de forme sphérique, par rapport à un axe (A) orienté au moins approximativement verticalement, et qui comporte une partie inférieure (14) pourvue d'un diamètre intérieur diminuant vers le bas,

— une cuve (32), qui comporte une paroi (33) au moins approximativement cylindrique et de même axe que le récipient (10) ainsi qu'un corps de renvoi (44) servant de fond, et

— un tube immergé (50), qui pénètre axialement par le haut dans la cuve (32), qui délimite par sa paroi (33) un volume annulaire élancé (54) et qui peut être relié à une source de gaz,

— caractérisé en ce que:

— un canal annulaire (18) est formé dans un socle (16), qui porte la partie inférieure (14) du récipient (10),

— comme entrée additionnelle de gaz, il est prévu au-dessus et radialement à l'extérieur de la paroi (33) de la cuve (32) un intervalle annulaire (20) qui peut être également relié à une source de gaz par l'intermédiaire du canal annulaire (18), et

— il est prévu radialement à l'intérieur de l'intervalle annulaire (20) au moins une buse (24, 26) pour l'injection de substances liquides et/ou pulvérulentes.

6. Appareil à lit de fluidisation selon une des revendications 1 à 5, caractérisé en ce que les buses (24, 26) sont dirigées vers le haut au moins approximativement perpendiculairement au courant de gaz pénétrant dans l'intervalle annulaire (20).

7. Appareil à lit de fluidisation selon une des revendications 1 à 6, caractérisé en ce que des buses à liquide (24) et des buses à solide (26) sont disposées par paires l'une en dessous de l'autre.

**Claims**

1. A fluidized bed apparatus for mixing, drying, granulating, pelleting, lacquering and/or coating powdery or granular material, comprising

— a receptacle (10) which is at least approximately rotationally symmetrical, especially spherical, with respect to an axis (A) of the receptacle that is at least approximately vertical and which includes a bottom member (14) having a downwardly diminishing inner diameter as well as a lower annular edge,

— a gas inlet located at the lower edge of the bottom member (14), adapted to be connected through an annular passage (18) to a gas source, and permitting gas to flow into the receptacle (10) with a radially inwardly directed flow component,

— a central deflector (44) which closes the receptacle (10) toward the bottom when in operation and deflects the gas introduced into it in upward direction, and

— a gas outlet (74) in an upper region of the receptacle (10), characterized in that

— the annular passage (18) is formed in a pedestal (16) which carries the bottom member (14) of the receptacle (10),

— the gas inlet comprises an annular gap (20) formed in the pedestal (16), and

— at least one nozzle (24, 26) is arranged radially within the annular gap (20) to inject a spray of liquid and/or powdery substances.

2. The fluidized bed apparatus as claimed in claim 1, characterized in that the gas inlet comprises one or more coaxially formed annular gaps (20, 76, 78) of different diameters.

3. The fluidized bed apparatus as claimed in claim 2, characterized in that the annular gap (78) having the smallest diameter communicates with an annular deflecting passage (88) defined between the deflector (44) and a jacket (90), placed on top of the same, and opening into the receptacle (10) in an upper end zone of the deflector (44).

4. The fluidized bed apparatus as claimed in claim 3, characterized in that at least one nozzle (24) is arranged radially within the opening of the deflecting passage (88) to inject a spray of liquid and/or powdery substances.

5. A fluidized bed apparatus for mixing, drying, granulating, pelleting, lacquering and/or coating powdery or granular material, comprising
— a receptacle (10) which is at least approximately rotationally symmetrical, especially spherical, with respect to an axis (A) of the receptacle that is at least approximately vertical and which includes a bottom member (14) having a downwardly diminishing inner diameter,
— a bowl (32) comprising a wall (33) which is at least approximately cylindrical and coaxial with the receptacle (10) and a deflector (44) serving as its bottom, and

— an immersion tube (50) which extends axially from above into the bowl (32), defining a slender annular space (54) with the wall (33) of the bowl, and is adapted to be connected to a gas source, characterized in that
— a pedestal (16) which carries the bottom member (14) of the receptacle (10) is formed with an annular passage (18),
— an annular gap (20) is arranged above and radially outside of the wall (33) of the bowl (32) as an additional gas inlet and likewise adapted for connection to a gas source, and
— at least one nozzle (24, 26) is arranged radially within the annular gap (20) to inject a spray of liquid and/or powdery substances.

6. The fluidized bed apparatus as claimed in one of claims 1 to 5, characterized in that the nozzles (24, 26) are directed upwardly at least approximately at right angles with respect to the flow of gas entering through the annular gap (20).

7. The fluidized bed apparatus as claimed in one of claims 1 to 6, characterized in that liquid nozzles (24) and solids nozzles (26) are arranged in pairs below each other.

*Fig. 1*

EP 0 172 530 B1

EP 0 172 530 B1

Fig. 1

_Fig. 2_